# EUROPEAN PATENT APPLICATION

(11) **EP 4 027 420 A1**
(43) Date of publication of application: **13.07.2022**
(21) Application number: 20878406.6
(22) Date of filing: 14.10.2020
(51) Int. Cl.: H01M 10/04, H01M 50/531

(54) **ELECTRODE ASSEMBLY MANUFACTURING METHOD AND ELECTRODE ASSEMBLY MANUFACTURED THEREBY**

(30) Priority: 21.10.2019 KR 20190131002
(71) Applicant: LG ENERGY SOLUTION, LTD., Seoul 07335 (KR)
(72) Inventor: KWON, Soon Kwan, Daejeon 34122 (KR); CHOI, Seong Won, Daejeon 34122 (KR); JUNG, Su Taek, Daejeon 34122 (KR)
(74) Representative: Plasseraud IP
(86) International application number: PCT/KR2020/014035
(87) International publication number: WO 2021/080239

(57) **Abstract**

The present invention relates to a method for manufacturing an electrode assembly and an electrode assembly manufactured therethrough, and the method for manufacturing an electrode assembly comprises a corona treatment process of performing corona discharge treatment on both edges of a separator in a direction perpendicular to a progress direction, a lamination process of alternately laminating the corona-treated separator and an electrode, and a bonding process of pressing the separator and the electrode, which are laminated, to bond the separator to the electrode, wherein, in the corona treatment process,

## Description

### CROSS-REFERENCE TO RELATED APPLICATION

The present application claims the benefit of the priority of Korean Patent Application No. 10-2019-0131002, filed on October 21, 2019, which is hereby incorporated by reference in its entirety.

### TECHNICAL FIELD

The present invention relates to a method for manufacturing an electrode assembly and an electrode assembly manufactured through the method.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length. Among them, the jelly-roll type electrode assembly is widely used because the jelly-roll type electrode assembly has an advantage is easily manufactured and has high energy density per weight.

In the case of a medium and large-sized battery having a long full length, adhesion between the electrode and the separator at a side of an outer portion (a tab portion and upper and lower ends) may be weaker than that therebetween at a side of a central portion during a lamination process due to collapse of an edge portion of the electrode. As a result, there is a problem in that the adhesion between the electrodes and the separator in a bicell is nonuniform. In severe cases, there is a problem in that the electrode and the separator do not adhere to each other at the outer portion, and thus, an interface is widened so as not to secure processability.

In addition, when the bonding is performed by additionally strongly pressing only the outer portions of the electrode and the separator, if strong adhesion is formed along the outer portion, there is a problem that cell performance due to lithium precipitation, which is caused because an internal gas in the electrode assembly is not discharged, is deteriorated.

[Prior Art Document] (Patent Document) Korean Patent Publication No. 10-2016-0010121

### DISCLOSURE OF THE INVENTION

### TECHNICAL PROBLEM

One aspect of the present invention is to provide an electrode assembly, in which a gas is well discharged while improving adhesion at an electrode tab portion, and a secondary battery comprising the electrode assembly.

### TECHNICAL SOLUTION

A method for manufacturing an electrode assembly according to an embodiment of the present invention comprises a corona treatment process of performing corona discharge treatment on both edges of a separator in a direction perpendicular to a progress direction, a lamination process of alternately laminating the corona-treated separator and an electrode, and a bonding process of pressing the separator and the electrode, which are laminated, to bond the separator to the electrode, wherein, in the corona treatment process, corona is partially discharged to both the edges of the separator to form a corona-treated section and a corona-untreated section.

In an electrode assembly according to an embodiment of the present invention, an electrode and a separator are alternately laminated to be boned to each other, wherein a corona-treated section and a corona-untreated section are formed at both edges of the separator.

### ADVANTAGEOUS EFFECTS

According to the present invention, when the separator is subjected to corona discharge treatment, the corona discharge may be partially performed at both edges of the separator to easily discharge the gas existing in the electrode assembly while improving the adhesion at the edges of the electrode and the separator. That is, the corona may be partially discharged to both the edges of the separator to form the corona-treated section and the corona-untreated section, thereby improving the adhesion between the corona-treated section of the separator and the electrode portion facing the corona-treated section and preventing the interface from being widened. In addition, the relative weak adhesion may be formed between the corona-untreated section of the separator and the electrode portion facing the corona-untreated section so that the gas is well discharged, thereby preventing the lithium from being precipitated and improving the cell performance.

### BRIEF DESCRIPTION OF THE DRAWINGS

FIG. 1 is a perspective view illustrating a method for manufacturing an electrode assembly according to an embodiment of the present invention.
FIG. 2 is a plan view of a first separator that is subjected to corona treatment through the method for manufacturing the electrode assembly according to an embodiment of the present invention.
FIG. 3 is a plan view of a second separator that is subjected to corona treatment through the method for manufacturing the electrode assembly according to an embodiment of the present invention.
FIG. 4 is a bottom view of an electrode assembly to which a separator that is subjected to corona treatment through the method for manufacturing the electrode assembly is applied according to an embodiment of the present invention.
FIG. 5 is a perspective view illustrating a method for manufacturing an electrode assembly according to another embodiment of the present invention.
FIG. 6 is a plan view of a first separator that is subjected to corona treatment through the method for manufacturing the electrode assembly according to another embodiment of the present invention.
FIG. 7 is a plan view of a second separator that is subjected to corona treatment through the method for manufacturing the electrode assembly according to another embodiment of the present invention.
FIG. 8 is a bottom view of an electrode assembly to which a separator that is subjected to corona treatment through the method for manufacturing the electrode assembly is applied according to another embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Method for manufacturing electrode assembly according to an embodiment

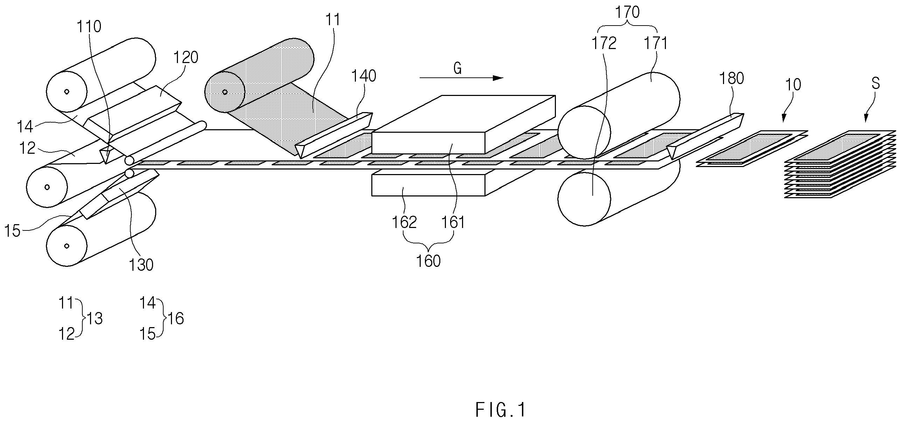

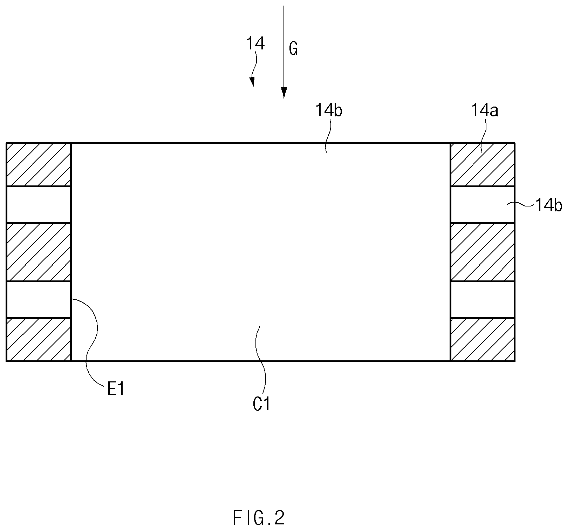

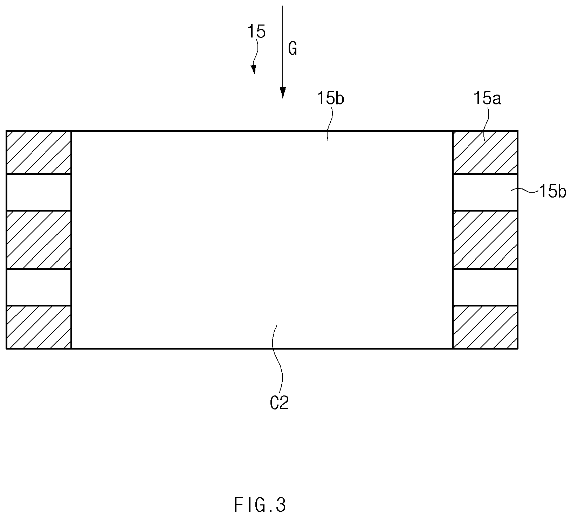

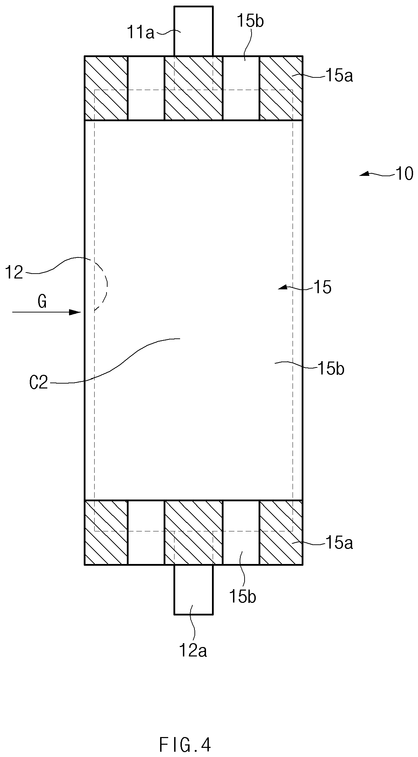

FIG. 1 is a perspective view illustrating a method for manufacturing an electrode assembly according to an embodiment of the present invention, FIG. 2 is a plan view of a first separator that is subjected to corona treatment through the method for manufacturing the electrode assembly according to an embodiment of the present invention, FIG. 3 is a plan view of a second separator that is subjected to corona treatment through the method for manufacturing the electrode assembly according to an embodiment of the present invention, and FIG. 4 is a bottom view of an electrode assembly to which a separator that is subjected to corona treatment through the method for manufacturing the electrode assembly is applied according to an embodiment of the present invention.

Referring to FIGS. 1 to 4, a method for manufacturing an electrode assembly according to an embodiment of the present invention comprises a corona treatment process of performing corona discharge treatment on a separator 16, a lamination process of alternately laminating the corona-treated separator 16 and an electrode 13, and a bonding process of pressing the separator 16 and the electrode 13, which are laminated, to bond the separator 16 to the electrode 13 so as to manufacture an electrode assembly S.

The electrode assembly S may be a chargeable and dischargeable power generation element and have a structure in which the electrode 13 and the separator 16 are combined and alternately laminated.

The electrode 13 may comprise an electrode collector and an electrode active material disposed on one surface or both surfaces of the electrode collector.

Here, the electrode 13 may comprise a first electrode 11 and a second electrode 12. In this case, the first electrode 11 may comprise a first electrode collector and a first electrode active material disposed on one surface or both surfaces of the first electrode collector. Also, the second electrode 12 may comprise a second electrode collector and a second electrode active material disposed on one surface or both surfaces of the second electrode collector.

Here, the first electrode 11 is provided as a positive electrode, and the second electrode 12 is provided as a negative electrode, but the present invention is not limited thereto. For example, the first electrode 11 may be provided as a negative electrode, and the second electrode 12 may be provided as a positive electrode.

The separator 16 may comprise a first separator 14 and a second separator 15.

The first separator 14 and the second separator 15 are made of an insulating material and are alternately laminated with the first electrode 11 and the second electrode 12.

Also, each of the first separator 14 and the second separator 15 may be made of, for example, a polyolefin-based resin film such as polyethylene or polypropylene having microporosity.

Hereinafter, referring to FIGS. 1 to 4, the method for manufacturing the electrode assembly according to an embodiment of the present invention will be described in more detail.

Referring to FIGS. 1 to 4, in the corona treatment process, both edges of the separator 16 are subjected to the corona discharge treatment in a direction perpendicular to a progress direction G.

Here, in the corona treatment process, corona may be partially discharged to both edges of the first separator 14 and the second separator 15 to form corona-treated sections 14a and 15a and corona-untreated sections 14b and 15b.

Here, in the corona discharge, a voltage between the electrodes increases at corona treatment parts 120 and 130 to cause a photoemission phenomenon at a portion having a large electric field on a surface of the electrode before spark discharge. Here, current of about 1 *µ*A to about 100 *µ*A flows. In addition, in the corona treatment process, a portion of the separator 16 is subjected to the corona discharge to modify a surface of the corona discharge-treated separator 16, thereby improving adhesion.

Furthermore, in the corona treatment process, the corona-treated sections 14a and 15a and corona-untreated sections 14b and 15b may be alternately formed in the progress direction G at both the edges of the first separator 14 and the second separator 15.

Also, central portions C1 and C2 of the separator 16 are the corona-untreated sections 14b and 15b. Here, in the corona treatment process, the first separator 14 and the second separator 15 may be partially subjected to the corona treatment so that the central portions C1 and C2 of the first separator 14 and the second separator 15 and the corona-untreated sections 14b and 15b formed at both sides of the first separator 14 and the second separator 15 are continuously connected to each other.

Referring to FIG. 2, in FIG. 2, it is shown that a solid line E1 is drawn between the central portion C1 of the first separator 14 and the corona-untreated section 14b formed on both the sides of the first separator 14, but this is drawn for the convenience in the drawing. Actually, a corona-untreated area is continuously connected between the central portion C1 of the first separator 14 and the corona-untreated section 14b formed on both the sides of the first separator 14, and thus, a gas generated at the central portion C1 of the first separator 14 is easily discharged through the corona-untreated section 14b formed at a side end of the first separator 14. Here, in FIG. 3, it is also shown that a solid line is drawn between the central portion C2 of the second separator 15 and the corona-untreated section 15b formed on both the sides of the second separator 15, but this is drawn for convenience in the drawing. Actually, a corona-untreated area is continuously connected between the central portion C2 of the second separator 15 and the corona-untreated section 15b formed on both the sides of the second separator 15.

The method of manufacturing the electrode assembly according to an embodiment of the present invention further comprises first and second electrode cutting processes of cutting the first electrode 11 and the second electrode 12 to a predetermined size through first and second cutting parts 110 and 140 to supply the cut electrodes. Here, the first electrode cutting process may be performed, for example, between the corona treatment process and the lamination process, and the second electrode cutting process may be performed before the corona treatment process.

In the lamination process, the corona-treated separator 16 and the electrode 13 may be alternately laminated. Here, in the lamination process, for example, the second separator 15, the second electrode 12, the first separator 14, and the first electrode 11 may be sequentially laminated.

Also, in the lamination process, the separator 16 and the electrode 13 may be laminated so that electrode tabs 11a and 12a provided at ends of the electrode 13 face the corona-treated sections 14a and 15a of the separator 16. Thus, it is possible to improve the adhesion of the electrode tabs 11a and 12a. Particularly, since the adhesion between the end of the electrode 13 provided with the electrode tabs 11a and 12a and the separator 16 is strengthened, an interface may be prevented from being widened to secure processability.

Furthermore, in the lamination process, the separator 16 and the electrode 13 may be laminated so that edges of the electrode tabs 11a and 12a face each other within the corona-treated sections 14a and 15a of the separator 16. In this case, the electrode tabs 11a and 12a may be formed to protrude in a lateral direction of the electrode 13, which is perpendicular to the progress direction G.

In the bonding process, the laminated separator 16 and electrode 13 may be pressed to be bonded to each other. Here, in the lamination process, for example, laminates, each of which has a structure in which the second separator 15, the second electrode 12, the first separator 14, and the first electrode 11 are sequentially laminated, are bonded to each other.

Also, in the bonding process, the laminate of the electrode 13 and the separator 16 may pass between a pair of lamination rollers 171 and 172 of a lamination part 170 and then be pressed to be bonded to each other.

In addition, the separator 16 and the electrode 13 are bonded to each other through the bonding process, and the corona-treated sections 14a and 15a of the first separator 14 and the second separator 15 and a portion of the electrode 13 facing the corona-treated sections 14a and 15a may be strongly bonded to each other. Here, the bonding strength may be relatively weak between the corona-untreated sections 14b and 15b of the first and second separators 14 and 15 and the portions of the electrode 13 facing the corona-untreated sections 14b and 15b. Thus, the gas may be easily discharged between the corona-untreated sections 14b and 15b of the first and second separators 14 and 15 and the portion of the electrode 13 facing the corona-untreated sections 14b and 15b. Particularly, the gas generated between the electrode assemblies S during charging and discharging of the battery may be easily discharged to the outside of the electrode assembly S to prevent lithium from being precipitated, thereby remarkably improving the battery performance.

The bonding process may comprise a heating step of applying heat through a heating part 160 before pressing the laminate of the electrode 13 and the separator 16. Here, in the heating step, the laminate of the electrode 13 and the separator 16 passes between a pair of heaters 161 and 162 of the heating part 160 and thus is heated.

The method for manufacturing the electrode assembly according to an embodiment of the present invention may further comprise a unit cell cutting process of cutting the laminate of the electrode 13 and the separator 16 to a predetermined size through a fourth cutting part 180 to form unit cells 10.

Here, in the unit cell cutting process, an area of the separator 16 between the plurality of electrodes 13 disposed to be spaced a determined distance from the separator 16 in the progress direction G may be cut to form the unit cells 10.

The method for manufacturing the electrode assembly according to an embodiment of the present invention may further comprise an electrode assembly stacking process of stacking the cut unit cells 10 to form an electrode assembly S. The electrode assembly S formed through the electrode assembly stacking process may be accommodated in a battery case together with an electrolyte to manufacture a secondary battery.

### Method for manufacturing electrode assembly according to another embodiment

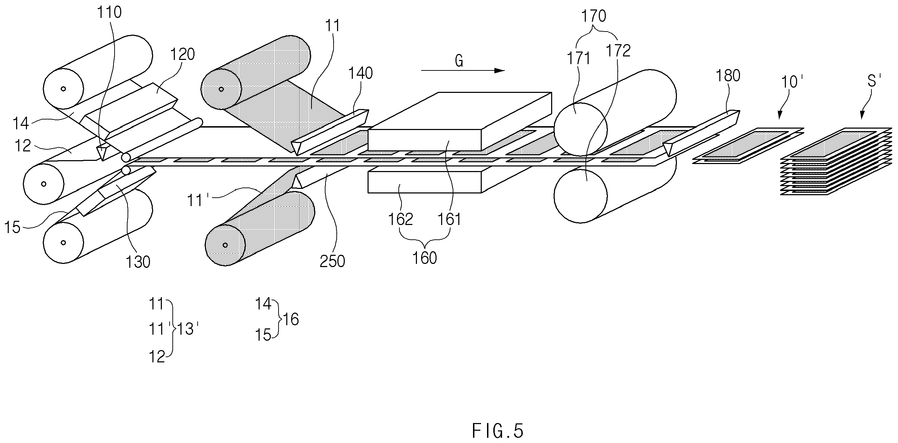

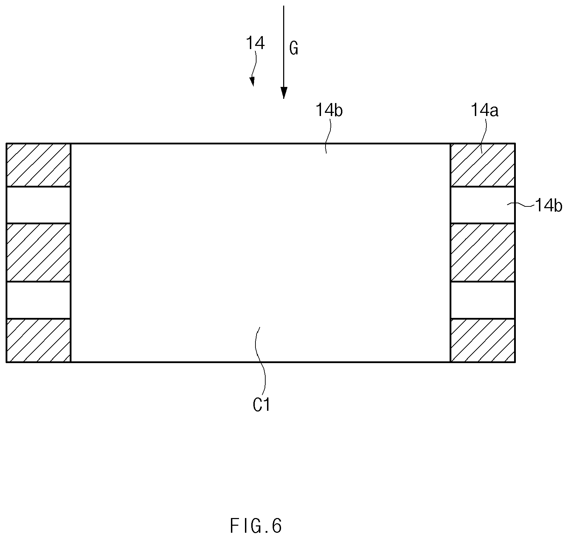

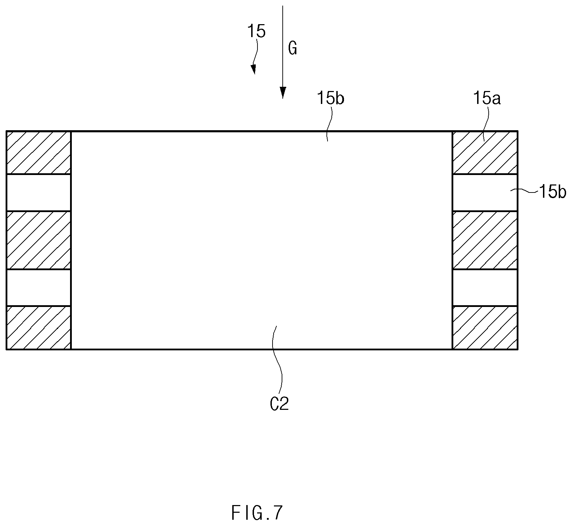

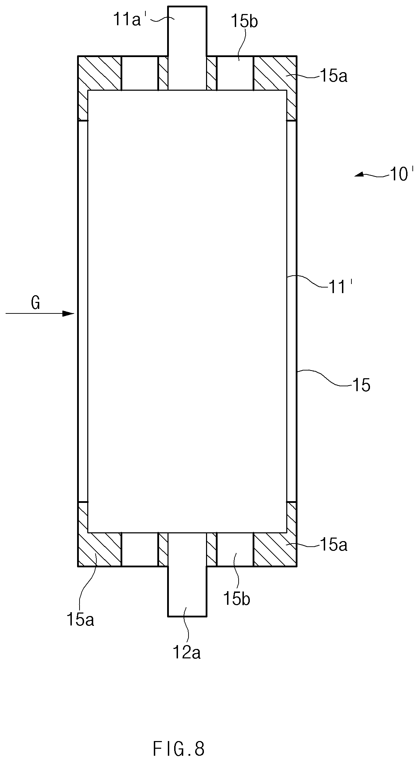

FIG. 5 is a perspective view illustrating a method for manufacturing an electrode assembly according to another embodiment of the present invention, FIG. 6 is a plan view of a first separator that is subjected to corona treatment through the method for manufacturing the electrode assembly according to another embodiment of the present invention, FIG. 7 is a plan view of a second separator that is subjected to corona treatment through the method for manufacturing the electrode assembly according to another embodiment of the present invention, and FIG. 8 is a bottom view of an electrode assembly to which a separator that is subjected to corona treatment through the method for manufacturing the electrode assembly is applied according to another embodiment of the present invention.

Hereinafter, a method of manufacturing an electrode assembly according to another embodiment will be described with reference to FIGS. 5 to 8.

Referring to FIGS. 5 to 8, a method for manufacturing an electrode assembly according to another embodiment of the present invention comprises a corona treatment process of performing corona discharge treatment on a separator 16, a lamination process of alternately laminating the corona-treated separator 16 and an electrode 13', and a bonding process of pressing the separator 16 and the electrode 13', which are laminated, to bond the separator 16 to the electrode 13 so as to manufacture an electrode assembly S'.

When the method for manufacturing the electrode assembly according to another embodiment of the present invention is compared to the method for manufacturing the electrode assembly according to the foregoing embodiment of the present invention, the electrode 13' may be further laminated. Thus, contents of this embodiment, which are duplicated with those according to the forgoing embodiment, will be omitted or briefly described, and also, differences therebetween will be mainly described.

In the corona treatment process, both edges of the separator 16 are subjected to corona discharge treatment through corona treatment parts 120 and 130 in a direction perpendicular to a progress direction G. Here, the separator 16 may comprise a first separator 14 and a second separator 15.

Also, in the corona treatment process, corona may be partially discharged to both edges of the first separator 14 and the second separator 15 to form corona-treated sections 14a and 15a and corona-untreated sections 14b and 15b.

In addition, in the corona treatment process, the corona-treated sections 14a and 15a and corona-untreated sections 14b and 15b may be alternately formed in the progress direction G at both the edges of the first separator 14 and the second separator 15.

Also, central portions C1 and C2 of the first separator 14 and the separator 15 are the corona-untreated sections 14b and 15b. Here, in the corona treatment process, the separator 16 may be partially subjected to the corona treatment so that the central portions C1 and C2 of the first separator 14 and the second separator 15 and the corona-untreated sections 14b and 15b formed at both sides of the first separator 14 and the second separator 15 are continuously connected to each other.

The method of manufacturing the electrode assembly according to another embodiment of the present invention further comprises an upper electrode cutting process, an intermediate electrode cutting process, and a lower electrode cutting process, in which a first electrode 11 forming an upper electrode, a second electrode 12 forming an intermediate electrode, and a first electrode 11' forming a lower electrode are respectively cut to predetermined sizes through a first cutting part 110, a second cutting part 140, and a third cutting part 250. Here, the upper electrode cutting process and the lower electrode cutting process may be performed, for example, between the corona treatment process and the lamination process, and the intermediate electrode cutting process may be performed before the corona treatment process. Here, the first electrode 11' forming the upper electrode and the first electrode 11 forming the lower electrode may have the same polarity.

In the lamination process, the corona-treated separator 16 and the electrode 13' may be alternately laminated. Here, in the lamination process, for example, the first electrode 11', the second separator 15, the second electrode 12, the first separator 14, and the first electrode 11 may be sequentially laminated.

In the lamination process, the separator 16 and the electrode 13' may be laminated so that electrode tabs 11a and 11a' provided at ends of the electrode 13' face the corona-treated sections 14a and 15a of the separator 16. Thus, it is possible to improve the adhesion of the electrode tabs 11a and 11a' . Particularly, since the adhesion between the end of the electrode 13' provided with the electrode tabs 11a and 11a' and the separator 16 is strengthened, an interface may be prevented from being widened to secure processability.

In the lamination process, the first separator 14, the second separator 15, and the electrode 13' may be laminated so that edges of the electrode tabs 11a and 11a' face each other within areas of the corona-treated sections 14a and 15a of the first separator 14 and the second separator 15. In this case, the electrode tabs 11a and 11a' may be formed to protrude in a lateral direction of the electrode 13', which is perpendicular to the progress direction G.

In the bonding process, the laminated separator 16 and electrode 13' may be pressed to be bonded to each other. Here, in the lamination process, for example, laminates, each of which has a structure in which the first electrode 11', the second separator 15, the second electrode 12, the first separator 14, and the first electrode 11 may be sequentially laminated, are bonded to each other.

Also, in the bonding process, the laminate of the electrode 13' and the separator 16 may pass between a pair of lamination rollers 171 and 172 of a lamination part 170 and then be pressed to be bonded to each other.

In addition, the separator 16 and the electrode 13' are bonded to each other through the bonding process, and the corona-treated sections 14a and 15a of the first separator 14 and the second separator 15 and a portion of the electrode 13' facing the corona-treated sections 14a and 15a may be strongly bonded to each other. Here, the bonding strength may be relatively weak between the corona-untreated sections 14b and 15b of the first and second separators 14 and 15 and the portions of the electrode 13' facing the corona-untreated sections 14b and 15b. Thus, a gas may be easily discharged between the untreated section of the separator 16 and the portion of the electrode 13' facing the untreated section.

The bonding process may comprise a heating step of applying heat through a heating part 160 before pressing the laminate of the electrode 13' and the separator 16. Here, in the heating step, the laminate of the electrode 13' and the separator 16 passes between a pair of heaters 161 and 162 of the heating part 160 and thus is heated.

In the method for manufacturing an electrode assembly according to another embodiment of the present invention, in the bonding process, the first electrode 11' , which is the lower electrode, may be further laminated below the second separator 15 to prevent a bottom surface of the corona treatment part 15a of the corona-treated second separator 15 from being damaged. That is, since both top and bottom surfaces of the corona-treated second separator 15 in the corona-treated section 15a, which are provided in the form of a lattice pattern, is protected by the first electrode 11' made of a metal material and having a plate shape, possibility of damage of the portion of the second separator 15, which is subjected to the corona treatment and thus is formed in the form of the lattice pattern, in the corona-treated section 15a may be low, and a degree of maintenance may be more improved. In addition, as a result, the bottom surface of the second separator 15 in the corona-treated section 15a may be exposed to prevent the second separator 15 from being damaged, thereby preventing electrode shortcircuit from occurring through the damaged portion of the second separator 15.

The method for manufacturing the electrode assembly according to another embodiment of the present invention may further comprise a unit cell cutting process of cutting the laminate of the electrode 13' and the separator 16 to a predetermined size through a fourth cutting part 180 to form unit cells 10'.

Here, in the unit cell cutting process, an area of the separator 16 between the plurality of electrodes 13' disposed to be spaced a determined distance from the separator 16 in the progress direction G may be cut to form the unit cells 10'.

The method for manufacturing the electrode assembly according to another embodiment of the present invention may further comprise an electrode assembly stacking process of stacking the cut unit cells 10' to form an electrode assembly S'. Here, the separator 16 may be additionally disposed between the unit cell 10' and the unit cell 10' . Also, the electrode assembly S' formed through the electrode assembly stacking process may be accommodated in a battery case together with an electrolyte to manufacture a secondary battery.

### Electrode assembly

Hereinafter, an electrode assembly according to an embodiment of the present invention will be described.

Referring to FIGS. 1 to 4, in an electrode assembly S according to an embodiment of the present invention, an electrode 13 and a separator 16 are alternately laminated to be bonded to each other, and corona-treated sections 14a and 15a and corona-untreated sections 14b and 15b are formed at both edges of a separator 16. Also, the electrode assembly S according to an embodiment of the present invention may further comprise electrode tabs 11a and 12a provided on the electrode 13.

The electrode assembly S according to an embodiment of the present invention relates to the electrode assembly manufactured by the method of manufacturing the electrode assembly according to the foregoing embodiments. Thus, contents of this embodiment, which are duplicated with those according to the forgoing embodiment, will be omitted or briefly described, and also, differences therebetween will be mainly described.

More particularly, in the electrode assembly S according to an embodiment of the present invention, the electrodes 13 and the separators 16 may be alternately laminated to be bonded to each other.

The separators 16 comprise a first separator 14 and a second separator 15. Here, corona-treated sections 14a and 15a and corona-untreated sections 14b and 15b may be formed at both edges of the first and second separators 14 and 15.

Here, the corona-treated sections 14a and 15a and the corona-untreated sections 14b and 15b may be alternately formed along both edges of the first and second separators 14 and 15.

In the first separator 14 and the second separator 15, the corona-treated sections 14a and 15a and a portion of the electrode 13 facing the corona-treated sections 14a and 15a may be strongly bonded to each other. Here, the bonding strength may be relatively weak between the corona-untreated sections 14b and 15b of the first and second separators 14 and 15 and the portions of the electrode 13 facing the corona-untreated sections 14b and 15b. Thus, the gas existing in the electrode assembly S may be easily discharged to the outside of the electrode assembly S through portions between the corona-untreated sections 14b and 15b of the first and second separators 14 and 15 and the portion of the electrode 13 facing the corona-untreated sections 14b and 15b.

Central portions C1 and C2 of the first separator 14 and the separator 15 are the corona-untreated sections 14b and 15b. Here, the central portions C1 and C2 of the first separator 14 and the second separator 15 and the corona-untreated sections 14b and 15b formed at both sides of the first separator 14 and the second separator 15 are continuously connected to each other.

Here, the gas existing inside the electrode assembly S may be discharged to the outside of the electrode assembly S through the central portions C1 and C2 of the separator 16, which are the untreated sections of the first separator 14 and the second separator 15, and a portion of both the edges.

The electrode tabs 11a and 12a may be provided at ends of the electrode 13. Here, the electrode tabs 11a and 12a may be disposed to face the corona-treated sections 14a and 15a of the separator 16. Thus, it is possible to improve the adhesion of the electrode tabs 11a and 12a. Particularly, since the adhesion between the end of the electrode 13 provided with the electrode tabs 11a and 12a and the separator 16 is strengthened, an interface may be prevented from being widened to secure processability.

Here, edges of the electrode tabs 11a and 12a may be disposed to face each other within the corona-treated section 14a and 15a of the separator 16. Therefore, adhesion between the edge portions of the electrode tabs 11a and 12a and the portion of the separator 16 facing the edge portions may be further improved.

While the present invention has been particularly shown and described with reference to exemplary embodiments thereof, it is to be understood that the scope of the present invention is not limited to the method for manufacturing the electrode assembly according to the present invention and the electrode assembly manufactured therethrough. It will be understood by those of ordinary skill in the art that various changes in form and details may be made therein without departing from the spirit and scope of the present invention.

Furthermore, the scope of protection of the present invention will be clarified by the appended claims.

### [Description of the Symbols]

10, 10': Unit cell
11, 11': First electrode
1a, 11a', 12a: Electrode tab
12: Second electrode
13, 13': Electrode
14: First separator
15: Second separator
16: Separator
14a, 15a: Corona-treated section
14b, 15b: Corona-untreated section
110: First cutting part
120, 130: Corona treatment part
140: Second cutting part
160: Heating part
161, 162: Heater
170: Lamination part
171, 172: Lamination roller
180: Fourth cutting part
250: Third cutting part
C1, C2: Central portion
S, S': Electrode assembly
G: Progress direction

## Claims

1. A method for manufacturing an electrode assembly, the method comprising:
a corona treatment process of performing corona discharge treatment on both edges of a separator in a direction perpendicular to a progress direction;
a lamination process of alternately laminating the corona-treated separator and an electrode; and
a bonding process of pressing the separator and the electrode, which are laminated, to bond the separator to the electrode,
wherein, in the corona treatment process, corona is partially discharged to both the edges of the separator to form a corona-treated section and a corona-untreated section.

2. The method of claim 1, wherein, in the treatment process, the corona-treated section and the corona-untreated section are alternately formed at both the edges of the separator in the progress direction.

3. The method of claim 2, wherein a central portion of the separator is the corona-untreated section, and
in the corona treatment process, the separator is partially subjected to the corona treatment so that the central portion of the separator and the corona-untreated section formed at each of both sides of the separator are continuously connected to each other.

4. The method of claim 3, wherein, in the lamination process, the separator and the electrode are laminated so that an electrode tab provided at each of ends of the electrode face the corona-treated section of the separator.

5. The method of claim 4, wherein the electrode tab protrudes in a lateral direction of the electrode, which is perpendicular to the progress direction, and
in the lamination process, the separator and the electrode are laminated so that edges of the electrode tabs face each other within the corona-treated section of the separator.

6. An electrode assembly, in which an electrode and a separator are alternately laminated to be boned to each other,
wherein a corona-treated section and a corona-untreated section are formed at both edges of the separator.

7. The electrode assembly of claim 6, wherein the corona-treated section and the corona-untreated section are alternately formed along both the edges of the separator.

8. The electrode assembly of claim 7, wherein a central portion of the separator is the corona-untreated section, and
the central portion of the separator and the corona-untreated section formed at each of both sides of the separator are continuously connected to each other.

9. The electrode assembly of claim 8, further comprising an electrode tab provided at an end of the electrode,
wherein the electrode tab is disposed to face the corona-treated section of the separator.

10. The electrode assembly of claim 9, wherein edges of the electrode tab face each other within the corona-treated section of the separator.
